(19) Europäisches Patentamt
European Patent Office
Office européen des brevets

(11) **EP 2 632 059 A1**

(12) **EUROPEAN PATENT APPLICATION**

(43) Date of publication:
**28.08.2013 Bulletin 2013/35**

(51) Int Cl.:
**H04B 7/06** (2006.01)   **H04B 7/04** (2006.01)

(21) Application number: **13169072.9**

(22) Date of filing: **01.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2010 US 320487 P**

(62) Document number(s) of the earlier application(s) in accordance with Art. 76 EPC:
**11713630.9 / 2 553 830**

(71) Applicant: **INTERDIGITAL PATENT HOLDINGS, INC.**
**Wilmington, Delaware 19810 (US)**

(72) Inventors:
• **Zhang, Hong, O.**
**Manalapan, NJ New Jersey 07726 (US)**

• **Pelletier, Benoit**
**Roxboro, Québec H8Y 1L3 (CA)**
• **Cai, Lujing**
**Moranville, NJ New Jersey 07551 (US)**
• **Levy, Joseph, S.**
**Merrick, NY New York 11566 (US)**

(74) Representative: **Meissner, Bolte & Partner**
**Anwaltssozietät GbR**
**Widenmayerstrasse 48**
**80538 München (DE)**

Remarks:
This application was filed on 24-05-2013 as a divisional application to the application mentioned under INID code 62.

(54) **System and methods for HSDPA multi-user MIMO Operation**

(57) A method of providing feedback from a wireless transmit and receive unit (WTRU) to a network device, the method comprising operating in multi-user multiple input and multiple output (MU-MIMO) mode; determining a single-user multiple input and multiple output (SU-MIMO) channel quality indicator (CQI) and precoding control information (PCI); determining an MU-MIMO CQI and PCI based on an assumption that an interfering stream is transmitted using a precoding weight; and transmitting the SU-MIMO CQI and PCI and the MU-MIMO CQI and PCI on a high speed dedicated physical control channel (HS-DPCCH).

Figure 5

**Description**

**CROSS REFERENCE TO RELATED APPLICATIONS**

This application claims the benefit of U.S. Provisional Patent Application No. 61/320,487, filed April 2, 2010, the contents of which are hereby incorporated by reference herein.

**BACKGROUND**

High-Speed Downlink Packet Access (HSDPA) is an enhanced 3G (third generation) mobile telephony communications protocol in the High-Speed Packet Access (HSPA) family, which may be referred to as 3.5G, 3G+ or turbo 3G. HSPA allows Universal Mobile Telecommunications System (UMTS) networks to support increased data transfer speeds and data capacity. Further increased data rates can be achieved using Multiple Input and Multiple Output (MIMO) technologies where multiple antennas are used at both the transmitter and the receiver of data. MIMO may be implemented in two forms: multi-user MIMO (MU-MIMO) and single-user MIMO (SU-MIMO). Beyond HSPA, MIMO may be used with 4G (or near-4G) systems, including Long Term Evolution (LTE) and LTE-Advanced networks.

SU-MIMO is a point-to-point multiple antenna connection between one mobile device (also referred to as user equipment (UE)), and one base station. SU-MIMO has been adopted in HSDPA Release 7. MU-MIMO enables multiple UEs to communicate with a single base station using the same frequency-domain, code-domain, and time-domain resources. In both forms of MIMO, spatial multiplexing may be used to transmit independent and separately encoded data signals (streams) from each of multiple transmit antennas, thus increasing the bandwidth available in a particular space. The maximum number of streams that may be transmitted in parallel between a UE and a base station will be limited to the least number of antennas configured on either the base station or the UE.

To fully take advantage of spatial multiplexing in SU-MIMO, spatial signatures of each antenna must be de-correlated. This process requires rich multipath propagation that typically cannot be guaranteed for outdoor communication systems such as cellular systems. Thus, SU-MIMO gain is highly dependent on the geographical location of a UE. A UE in a location where MIMO channel matrixes are highly correlated will enjoy less of the spatial multiplexing gain than if the MIMO channel matrixes were not highly correlated. On the other hand, in MU-MIMO, the de-correlation between signatures of different UEs occurs naturally due to the fact that the separation between the UEs is typically large relative to the wavelength. Therefore, MU-MIMO has the potential to provide greater data throughput than SU-MIMO.

**SUMMARY**

Embodiments disclosed herein include methods and systems for enabling MU-MIMO functions on a UE. In one embodiment, a precoder codebook with precoding matrices may be generated to assist in improving system throughput. Three bit precoding information may be transmitted to a UE using existing specifications designed for two bit precoding information by reinterpreting fields described in such specifications as set forth herein. Channel state information may be provided to a base station by a UE using several feedback mechanisms, including reporting channel state information as if the UE is operating in SU-MIMO mode and reporting a best channel quality indicator with various forms of precoding control information.

Methods and systems are also provided for determining on a UE the current MIMO transmission mode. In some embodiments, MU-MIMO parameters may be signaled to a UE using implicit dynamic signaling that allows a UE to determine the MIMO transmission mode based on evaluating physical channel information. A UE may also use explicit dynamic signaling, where specific MIMO transmission mode data is encoded into a control channel transmission. Semi-dynamic signaling may also be used which allows a UE to determine the MIMO transmission mode via data received from higher layers.

In an embodiment, a wireless transmit and receive unit (WTRU) may be configured or may execute a method to provide feedback to a network device by operating in multi-user multiple input and multiple output (MU-MIMO) mode, receiving a plurality of data streams from a Node B, determining a single-user multiple input and multiple output (SU-MIMO) channel quality indicator (CQI) and precoding control information (PCI), determining a multiple-user multiple input and multiple output (MU-MIMO) CQI and PCI, and transmitting the SU-MIMO CQI and PCI and the MU-MIMO CQI and PCI on a high speed dedicated physical control channel (HS-DPCCH). The WTRU may transmit the SU-MIMO CQI and PCI for each of the plurality of data streams to the Node B. The SU-MIMO CQI and PCI for each of the plurality of data streams may be transmitted in a HS-DPCCH subframe, which may, in an embodiment, also includes a hybrid automatic repeat request acknowledgement (HARQ-ACK). An alternate MU-MIMO PCI may also be determined, and the MU-MIMO PCU may be determined using an assumption that an interfering stream is associated with the alternate MU-MIMO PCI. These and other embodiments are set forth in more detail herein.

**BRIEF DESCRIPTION OF THE DRAWINGS**

Figure 1A is a system diagram of an example communications system in which one or more disclosed embodiments may be implemented.

Figure 1 B is a system diagram of an example wireless transmit/receive unit (WTRU) that may be used within the communications system illustrated in Figure 1A.

Figure 1C is a system diagram of an example radio access network and an example core network that may be used within the communications system illustrated in FIG. 1A.

Figure 2 illustrates a non-limiting example HSDPA MU-MIMO transmitter structure.

Figure 3 illustrates a non-limiting example method of determining a means for signaling precoding information.

Figure 4 illustrates a non-limiting example method of determining a means for feeding back channel state information.

Figure 5 illustrates a non-limiting example method of determining a means for feeding back channel state information.

Figure 6 illustrates a non-limiting example HS-DPCCH frame structure as implemented in one embodiment.

Figure 7 illustrates another non-limiting example HS-DPCCH frame structure as implemented in one embodiment.

Figure 8 illustrates another non-limiting example HS-DPCCH frame structure as implemented in one embodiment.

Figure 9 illustrates non-limiting example HS-DPCCH PCI/CQI report patterns.

Figure 10 illustrates a non-limiting example method of implicitly determining a MIMO mode.

**DETAILED DESCRIPTION OF ILLUSTRATIVE EMBODIMENTS**

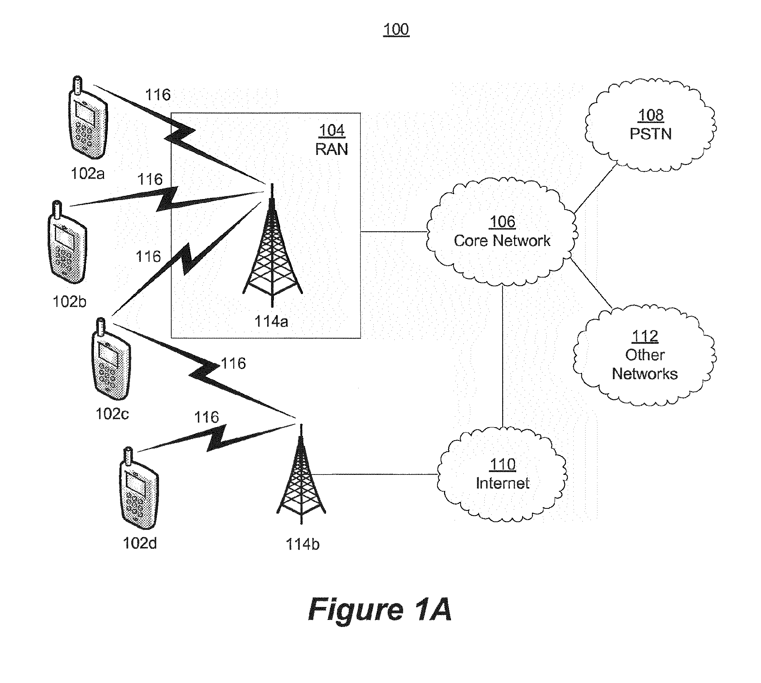

Figure 1A is a diagram of an example communications system 100 in which one or more disclosed embodiments may be implemented. The communications system 100 may be a multiple access system that provides content, such as voice, data, video, messaging, broadcast, *etc.,* to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in Figure 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUS, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node B, an eNodeB, a Home Node B, a Home eNodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, *etc.* The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, *i.e.,* one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, *etc.*). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanccd (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in Figure 1A may be a wireless router, Home NodeB, Home eNodeB, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, *etc.*) to establish a picocell or femtocell. As shown in FIG. 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in Figure 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, *i.e.,* the WTRUs 102a, 102b, 102c, 102d may include multiple transceivers for communicating with different wireless networks over different wireless links. For example, the WTRU 102c shown in Figure 1A may be configured to communicate with the base station 114a, which may employ a cellular-based radio technology, and with the base station 114b, which may employ an IEEE 802 radio technology.

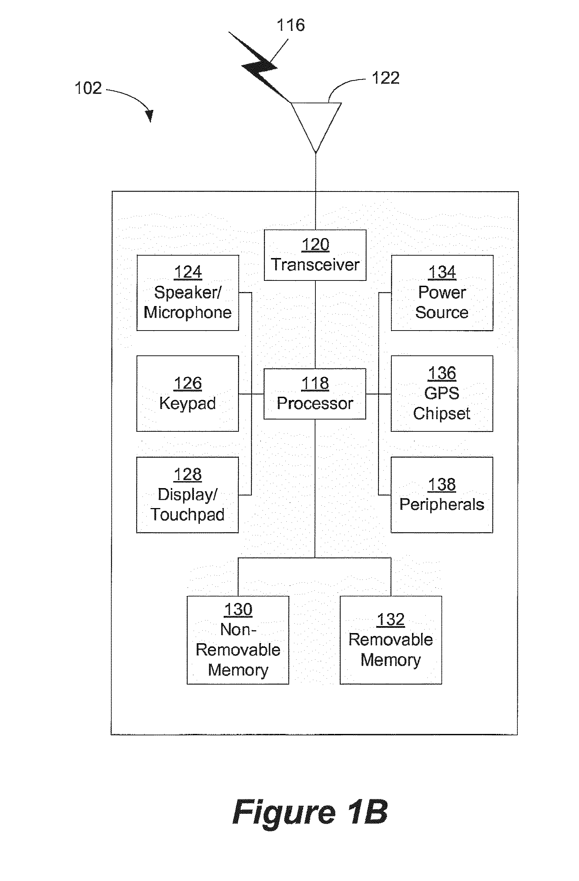

Figure 1B is a system diagram of an example WTRU 102. As shown in Figure 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (*e.g.,* the base station 114a) over the air interface 116. For example, in one embodiment, the transmit/receive element 122 may be an antenna configured to transmit and/or receive RF signals. In another embodiment, the transmit/ receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in Figure 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/ microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), *etc.*), solar cells, fuel cells, and the like.

The processor 118 may also be coupled to the GPS chipset 136, which may be configured to provide location information (e.g., longitude and latitude) regarding the current location of the WTRU 102. In addition to, or in licu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an c-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

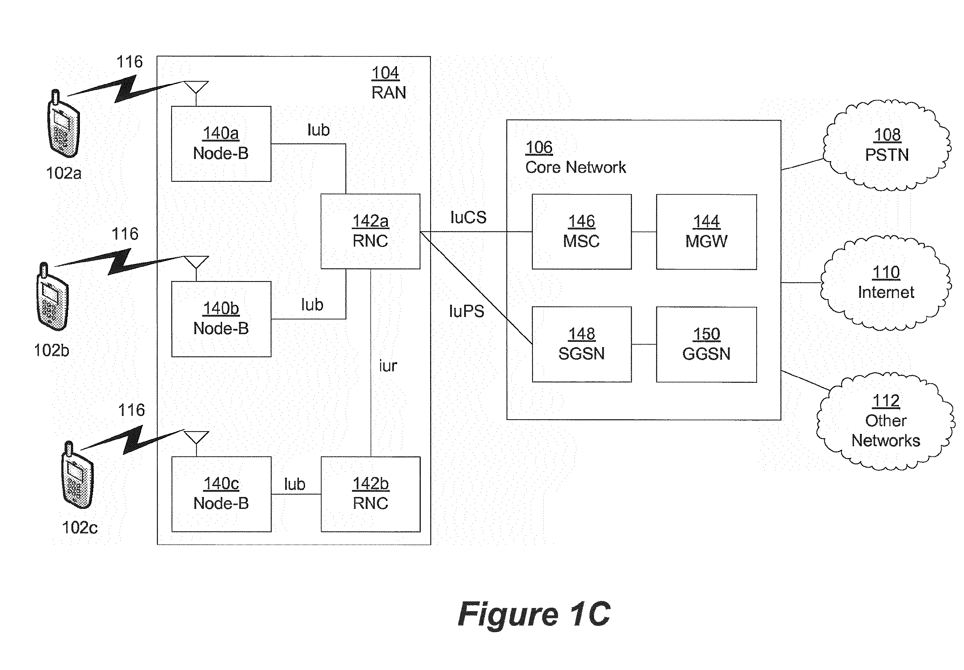

Figure 1C is a system diagram of the RAN 104 and the core network 106 according to an embodiment. As noted above, the RAN 104 may employ a UTRA radio technology to communicate with the WTRUs 102a, 102b, 102c over the air interface 116. The RAN 104 may also be in communication with the core network 106. As shown in Figure 1C, the RAN 104 may include NodeBs 140a, 140b, 140c, which may each include one or more transceivers for communicating with the WTRUs 102a, 102b, 102c over the air interface 116. The NodeBs 140a, 140b, 140c may each be associated with a particular cell (not shown) within the RAN 104. The RAN 104 may also include RNCs 142a, 142b. It will be appreciated that the RAN 104 may include any number of NodeBs and RNCs while remaining consistent with an embodiment.

As shown in Figure 1C, the NodeBs 140a, 140b may be in communication with the RNC 142a. Additionally, the NodeB 140c may be in communication with the RNC142b. The NodeBs 140a, 140b, 140c may communicate with the respective RNCs 142a, 142b via an Iub interface. The RNCs 142a, 142b may be in communication with one another via an Iur interface. Each of the RNCs 142a, 142b may be configured to control the respective NodeBs 140a, 140b, 140c to which it is connected. In addition, each of thc RNCs 142a, 142b may be configured to carry out or support other functionality, such as outer loop power control, load control, admission control, packet scheduling, handover control, macrodiversity, security functions, data encryption, and the like.

The core network 106 shown in Figure 1C may include a media gateway (MGW) 144, a mobile switching center (MSC) 146, a serving GPRS support node (SGSN) 148, and/or a gateway GPRS support node (GGSN) 150. While each of the foregoing elements arc depicted as part of the core network 106, it will be appreciated that any one of these elements may be owned and/or operated by an entity other than the core network operator.

The RNC 142a in the RAN 104 may be connected to the MSC 146 in the core network 106 via an IuCS interface. The MSC 146 may be connected to the MGW 144. The MSC 146 and the MGW 144 may provide the WTRUs 102a, 102b, 102c with access to circuit-switched networks, such as the PSTN 108, to facilitate communications between the WTRUs 102a, 102b, 102c and traditional land-line communications devices.

The RNC 142a in the RAN 104 may also be connected to the SGSN 148 in the core network 106 via an IuPS interface. The SGSN 148 may be connected to the GGSN 150. The SGSN 148 and the GGSN 150 may provide the WTRUs 102a, 102b, 102c with access to packet-switched networks, such as the Internet 110, to facilitate communications between and the WTRUs 102a, 102b, 102c and IP-enabled devices.

As noted above, the core network 106 may also be connected to the networks 112, which may include other wired or wireless networks that are owned and/or operated by other service providers.

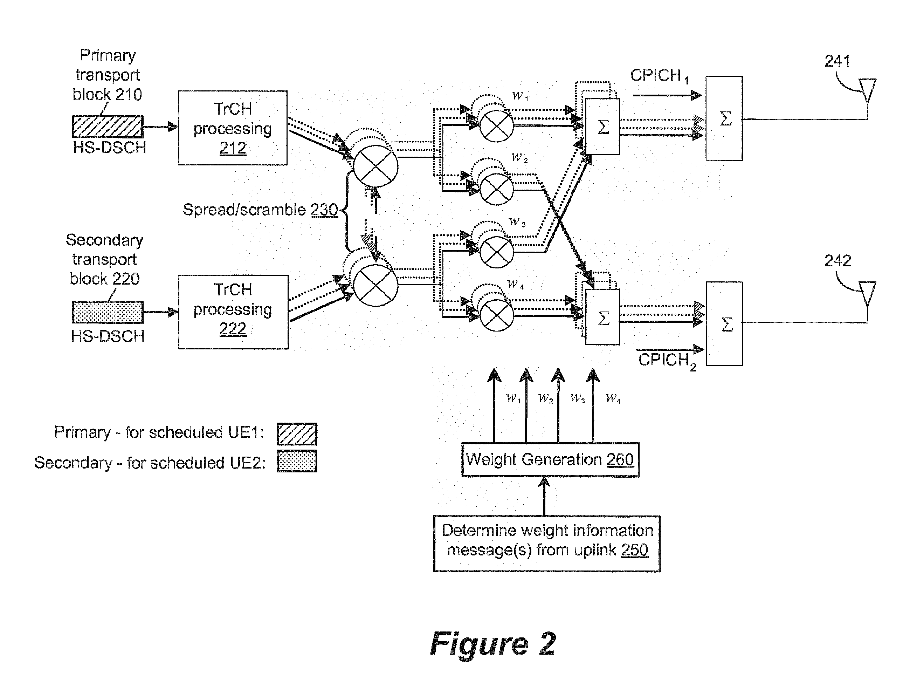

Figure 2 illustrates a non-limiting example HSDPA MU-MIMO transmitter structure. As can be seen in this figure, each stream generated is intended for a different user. For example, the illustrated primary stream is intended for UE1, while the illustrated secondary stream is intended for UE2. The primary stream may include primary transport block 210 that may provided via High-Speed Downlink Shared Channel (HS-DSCH) and undergo transport channel (TrCH) processing 212. The secondary stream may include secondary transport block 220 that may provided via HS-DSCH and undergo TrCH processing 222. Both streams may be spread and/or scrambled 230 and multiplexed, combined, and/or processed in any other way before transmission via multiple antennas, such as antenna 241 and 242 shown in Figure 2. In an embodiment, a common pilot channel (CPICH) may be transmitted with each of the streams. Note that one or more weight information messages may be determined from the uplink 250 and generated 260 for the processing of either or both the primary and secondary streams.

Utilizing MU-MIMO techniques may enhance performance beyond that offered by SU-MIMO by taking advantage of the increased geographical separation between multiple UEs with MIMO operation by enabling additional spatial separation. For example, rather than two streams belonging to the same user as in SU-MIMO transmission, in MU-MIMO each stream may belong to a different user.

MU-MIMO may require more accurate channel state information at a base station than SU-MIMO. Set forth herein arc systems and methods that provide means to feed back channel state information to a base station in the MU-MIMO context while maintaining reasonable feedback signaling overhead so that the gain achieved by MU-MIMO is diminished as little as possible due to the increased overhead. Also set forth herein are downlink and uplink control channel designs that supports MU-MIMO. Uplink signaling as disclosed may be flexible enough so that a base station can schedule a UE in either SU-MIMO or MU-MIMO mode. Downlink signaling may include the capability to notify a UE of the mode of an upcoming High-Speed Physical Downlink Shared Channel (HS-PDSCH) subframe so that the UE may apply appropriate signal processing techniques at the receiver.

In an embodiment, UEs may be paired together so that a base station (e.g., a NodeB, access point, etc.) may transmit data for several UEs over a single transmission time interval (TTI). This may be accomplished using spatial multiplexing techniques, such as space-division multiple access (SDMA) or MU-MIMO. New precoding vectors may be used, in an embodiment, in addition to those already specified in current standards, such as HSDPA Release 7. A set of such precoding vectors may be referred to as a precoder codebook. Precoding vectors may be used to determine the independent and appropriate weighting for each transmit antenna of a base station when the transmit antennas are emitting the multiple streams. By using the vectors described herein, system throughput may be improved and potentially maximized.

A codebook design of the present disclosure may be modeled on that of HSDPA Release 7, where downlink MIMO was introduced. A goal in creating a precoder codebook may be to minimize the precoding index signaling overhead and the size of the precoder codebook. Therefore, certain restrictions may be placed on the precoding matrix

$$W = \begin{bmatrix} w_1 & w_3 \\ w_2 & w_4 \end{bmatrix}$$

where $w_3 = w_1 = \dfrac{1}{\sqrt{2}}$, $w_4 = -w_2$, $w_4 = -w_2$, and $w_2 \in w_2 \in \left\{ \dfrac{1+j}{2}, \dfrac{1-j}{2}, \dfrac{-1+j}{2}, \dfrac{-1-j}{2} \right\}$. With such restric-

tions, only signaling of $w_2$ may be required, and a base station and a UE may only need to save four scalar elements. Even with such restrictions enforced, there may be essentially unlimited matrices that may be generated. Because so many matrices are available, it may be possible to determine precoding matrices that maintain maximum system performance.

An HSDPA Release 7 matrix, for example, for may be generated based on the following unitary matrix

$$\begin{bmatrix} \cos\theta & \sin\theta \\ \sin\theta\, e^{j\varphi} & -\cos\theta e^{j\varphi} \end{bmatrix}$$

by choosing $\theta = -\dfrac{\pi}{4}$ and $\varphi = -\dfrac{\pi}{4},\quad \dfrac{\pi}{4}, -\dfrac{3\pi}{4}, \dfrac{3\pi}{4}.$ In order to maximize the distance between codebook matrixes, $\theta = -\dfrac{\pi}{4}$ and $\varphi = 0, \dfrac{\pi}{2}, \pi, \dfrac{3\pi}{2}$ may be used to generate additional precoding matrixes as shown below:

$$\begin{bmatrix} \dfrac{1}{\sqrt{2}} & \dfrac{1}{\sqrt{2}} \\ \dfrac{1}{\sqrt{2}} & -\dfrac{1}{\sqrt{2}} \end{bmatrix}, \begin{bmatrix} \dfrac{1}{\sqrt{2}} & \dfrac{1}{\sqrt{2}} \\ \dfrac{j}{\sqrt{2}} & -\dfrac{j}{\sqrt{2}} \end{bmatrix}, \begin{bmatrix} \dfrac{1}{\sqrt{2}} & \dfrac{1}{\sqrt{2}} \\ -\dfrac{1}{\sqrt{2}} & \dfrac{1}{\sqrt{2}} \end{bmatrix}, \begin{bmatrix} \dfrac{1}{\sqrt{2}} & \dfrac{1}{\sqrt{2}} \\ -\dfrac{j}{\sqrt{2}} & \dfrac{j}{\sqrt{2}} \end{bmatrix}$$

These matrices clearly comply with the restrictions set forth above requiring that $w_3 = w_1 = \dfrac{1}{\sqrt{2}}$, and $w_4 = -w_2$. In combination with HSDPA Release 7 codebook, we now have:

$$w_2 \in \left\{ \dfrac{1+j}{2}, \dfrac{1-j}{2}, \dfrac{-1+j}{2}, \dfrac{-1-j}{2}, \dfrac{1}{\sqrt{2}}, -\dfrac{1}{\sqrt{2}}, \dfrac{j}{\sqrt{2}}, -\dfrac{j}{\sqrt{2}} \right\}$$

An additional bit, for a total of three bits, may be used to identify the index of $w_2$, which may effectively be the precoding control information (PCI). Precoding information may be transmitted via both downlink (referred to as precoding weight information (PWI)) using a High Speed Shared Control Channel (HS-SCCH) type 3, and uplink (referred to as PCI) using a High Speed Dedicated Physical Control Channel (HS-DPCCH). Because legacy signaling designs were for two-bit PCI (that may be used to index up to four different precoding vectors or matrices), in an embodiment HS-SCCH type 3 and HS-DPCCH for PWI and PCI are still used for MU-MIMO in order to minimize the impact on existing specification, but certain fields carried by these channels may be reinterpreted.

For example, in an embodiment three-bit PWI information may be signaled on a downlink and received by the WTRU. In an example, the conventional HS-SCCH type 3 may be used by jointly re-interpreting the $x_{ccs,7}$ bit field, the $x_{ms}$ bit field, and the $x_{pwipb}$ bit field of HS-SCCH type 3 part I. In another embodiment, a new HS-SCCH type may be defined carrying a larger PWI field (e.g., 3 bits instead of 2). The conventional coding for the HS-SCCH type 3 part I may be modified to support the larger PWI field, for example, by changing the rate matching algorithm to apply additional puncturing. A WTRU operating in a mode requiring the larger PWI field may be configured to use the new HS-SCCH type.

In an example embodiment, three-bit PCI information may be signaled from a UE to a base station using HS-DPCCH by reusing and re-interpreting a type A channel quality indicator/precoding control information (CQI/PCI) report, which may be ten bits. In such an embodiment, two three-bit PCIs and one four-bit best CQI may be reported, or one three-bit PCI and one four- or five-bit best CQI may be reported. In an embodiment, a seven-bit type B CQI/PCI report may be reused with one three-bit PCI and one four-bit best CQI.

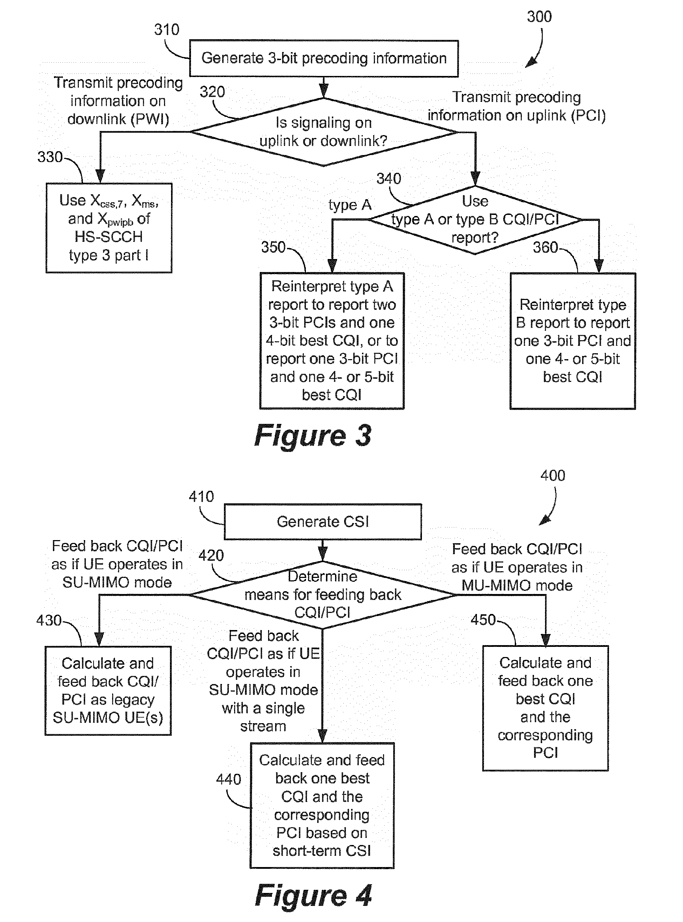

Non-limiting method 300 of Figure 3 illustrates an example method of transmitting precoding information on either an uplink or a downlink according to the present disclosure. Note that the blocks of method 300 may be executed in any order or combination, and may be executed in conjunction with additional activities and functions not listed. Each of the blocks of method 300 may also be executed individually without the execution of any other block, and any subset of the blocks of method 300 may be executed without executing any blocks not included in such a subset. All such embodiments are contemplated as within the scope of the present disclosure.

At block 310, three-bit precoding information may be generated, such as the three-bit PCI and PWI described herein. At block 320, the correct branch of method 300 may be chosen based on whether the signaling is to take place on the uplink or downlink. If the precoding information is to be transmitting in the downlink (e.g., by a base station or node B), at block 330, the precoding information is transmitted as the $x_{ccs,7}$ bit field, the $x_{ms}$ bit field, and the $x_{pwipb}$ bit field of HS-SCCH type 3 part I.

If the signaling is to be performing using the uplink, by a WTRU or UE), at block 340 it may be determined whether to use a type A CQI/PCI report or a type B CQI/PCI report to assist in signaling precoding information. If a type A CQI/PCI report is to be used, at block 350 a type A report may be reinterpreted to report two three-bit PCIs and one four-bit best CQI. Alternatively, at block 350 a type A report may be reinterpreted to report one three-bit PCI and one four- or five-bit best CQI.

If, at block 340, it is determined that the uplink precoding information signaling is to be performed using a type B CQI/PCI report, at block 360 a seven-bit type B report may be reinterpreted to report one three-bit PCI one four-bit best CQI.

An important function of MIMO systems, including MU-MIMO, is the transmission of channel state information (CSI) from a UE to a base station and the implementation of such transmissions. Requirements for CSI feedback may vary depending on the MIMO operation mode (e.g., SU-MIMO or MU-MIMO). Presented herein are feedback methods and systems that are suitable for HSDPA multi-antenna systems and the signaling design that may be used to support the disclose feedback mechanism.

In some embodiments, in order to reduce the PCI signaling overhead, a restriction may be enforced that a precoding vector of a particular UE be orthogonal to another precoding vector of an interfering UE. Another requirement that may be enforced is that a unique mapping between the two vectors exists so that knowledge of one vector may be used to derive the other vector. Alternatively, it may be beneficial for a transmitter to adapt to the CSI as much as possible. In such implementations, using non-unitary and/or non-orthogonal precoding matrices may provide better performance, especially when the granularity of CSI quantization is high.

When a UE is configured to determine a CQI/PCI for MU-MIMO, the UE may also be configured to assume that for each candidate precoding weight the data targeted to a different UE (*e.g.*, an interfering stream) is being sent using a different pre-coding weight. In such an embodiment, the UE may be configured to assume that the interfering stream is sent on a precoding weight determined as a function of the candidate precoding weight based on a fixed rule, on an the orthogonal pre-coding weight, on a different and pre-fined pre-coding weight, or on a precoding weight that leads to the largest interference (worst-case scenario). Alternatively, or in addition, a UE may assume that all the appropriate channelization codes are being used for the interfering stream. In another alternative, a UE may be configured to instead, or in addition, assume that a certain power offset may be associated with the interfering stream. Such a power offset may be fixed in a specification, signaled by the network via radio resource control (RRC) signaling, or signaled on a more dynamic basis using layer 1 and/or layer 2 signaling.

The UE may also be configured to calculate an alternate PCI or an alternate PCI/CQI for MU-MIMO. This alternate PCI or PCI/CQI may be used by an eNodeB to determine the best combination of weights to use for MU-MIMO transmission. The alternate PCI may be determined by the UE to be the worst PCI for data transmission, or to be the preferred PCI for the NodeB on which to transmit the interfering stream. In such an embodiment, the UE may be configured to calculate the worst PCI, that is the PCI resulting in the lowest signal quality (for that UE) and, in an embodiment, the associated CQI. Alternatively, the UE may be configured to calculate the PCI that leads to the lowest inter-stream interference when the interfering stream is transmitted on it, and, in an embodiment, an associated CQI. The UE may be configured to use a different reporting table for the alternate PCI and CQI. In calculating the best PCI/CQI, the UE may be configured to assume that the interfering stream is sent on the alternate PCI reported. Alternatively, or in addition, a UE may assume that all the appropriate channelization codes are being used for the interfering stream. In another alternative, a UE may be configured to instead, or in addition, assume that a certain power offset may be associated with the interfering stream.

In embodiments that utilize a unitary precoding matrix, for example the orthogonal matrices described above, various feedback mechanisms may be used. In an embodiment, a UE may feed back CQI/PCI to a base station as if the UE operated in SU-MIMO mode, *i.e.,* the UE may calculate and report CQI/PCI as legacy SU-MIMO UEs. Note this may also be applicable to transmit antenna array (TxAA) capable or configured UEs.

Alternatively, in an embodiment that utilizes a unitary precoding matrix, a UE may be configured to calculate and feed back a single one best CQI and the corresponding PCI based on the short-term CSI as if the UE operated in SU-MIMO with a single stream. In such embodiments, the UE may calculate a long-term channel covariance matrix (e.g., this long-term channel covariance matrix may be obtained by averaging short-term CSI over a certain period of time) and may feed back the long term channel covariance matrix index. Such a channel covariance matrix may be pre-quantized to a few matrices that may be known by both the UE and the base station. Here, "short term" may refer to the conventional PCI calculation (i.e., based on a subframe averaging) whereas the long term averaging may be carried out over a full frame, or even several frames.

In yet another embodiment that utilizes a unitary precoding matrix, a UE may be configured to feed back a single one best CQI and the corresponding PCI as if the UE operated in MU-MIMO mode.

In another embodiment that utilizes a unitary precoding matrix, a UE may be configured to feed back a one best CQI, the corresponding PCI, and an alternate PCI. Optionally, the UE may feed back the alternate PCI with the corresponding CQI as if the UE operated in MU-MIMO mode.

Figure 4 illustrates non-limiting example method 400 of utilizing a unitary precoding matrix to feed back CSI according to some embodiments. Note that the blocks of method 400 may be executed in any order or combination, and may be executed in conjunction with additional activities and functions not listed. Each of the blocks of method 400 may also be executed individually without the execution of any other block, and any subset of the blocks of method 400 may be executed without executing any blocks not included in such a subset. All such embodiments are contemplated as within the scope of the present disclosure.

At block 410, a UE may generate channel state information (CSI). At block 420, a determination may be made as to the method or means of feeding back the generated CQI/PCI. If it is determined at block 420 to feed back CQI/PCI as if the UE operated in SU-MIMO mode, at block 430 the UE may calculate and report CQI/PCI as one or more legacy UEs.

If it is determined at block 420 to feed back CQI/PCI as if the UE operated in SU-MIMO mode using a single stream, at block 440 the UE may feed back a single one best CQI and the corresponding PCI based on the short-term CSI. At block 440, the UE may calculate a long-term channel covariance matrix (*i.e.,* short-term CSI averaged over a certain period of time) and may feed back the long term channel covariance matrix index. The channel covariance matrix may be pre-quantized to a few matrices that may be known by both the UE and the base station. Note that "short term" may refer to the conventional PCI calculation (i.e., based on a subframe averaging) whereas the long term averaging may be carried out over a full frame, or even several frames.

If it is determined at block 420 to feed back CQI/PCI as if the UE operated in MU-MIMO mode, at block 450 the UE may feed back a single one best CQI and the corresponding PCI. Optionally the UE may also feed back at the same time an alternate (worst) PCI and optionally the corresponding CQI.

In embodiments where it is desired that a transmitter adapt to the CSI as much as possible, there is no requirement that a precoding vector has to be paired with its orthogonal companion for MU-MIMO. In these general precoding matrix implementations, a UE may be configured to feed back a single one best CQI and the corresponding PCI based on the short-term CSI as if the UE operated in SU-MIMO with a single stream. Additionally, the UE may calculate a long-term channel covariance matrix (i.e., short-term CSI averaged over a certain period of time) and may feed back the long-term channel matrix index to the base station.

Alternatively, a UE may feed back one best CQI and the corresponding PCI based on the short-term CSI as if the UE operated in SU-MIMO with single stream case, and the UE may also feed back the PCI that corresponds to the worst CQI. TxAA capable UEs may feed back only the best CQI and its associated PCI.

In other general precoding matrix implementations, a UE may feed back a single one best CQI and the corresponding PCI as if the UE operated in MU-MIMO mode. A UE may feed back one best CQI and the corresponding PCI as if the UE operated in MU-MIMO mode while at the same time feeding back a PCI that corresponds to the worst CQI.

In another general precoding matrix implementations, a UE may feed back CQI/PCI as if the UE operated in SU-MIMO mode by calculating and reporting CQI/PCI as legacy SU-MIMO UEs.

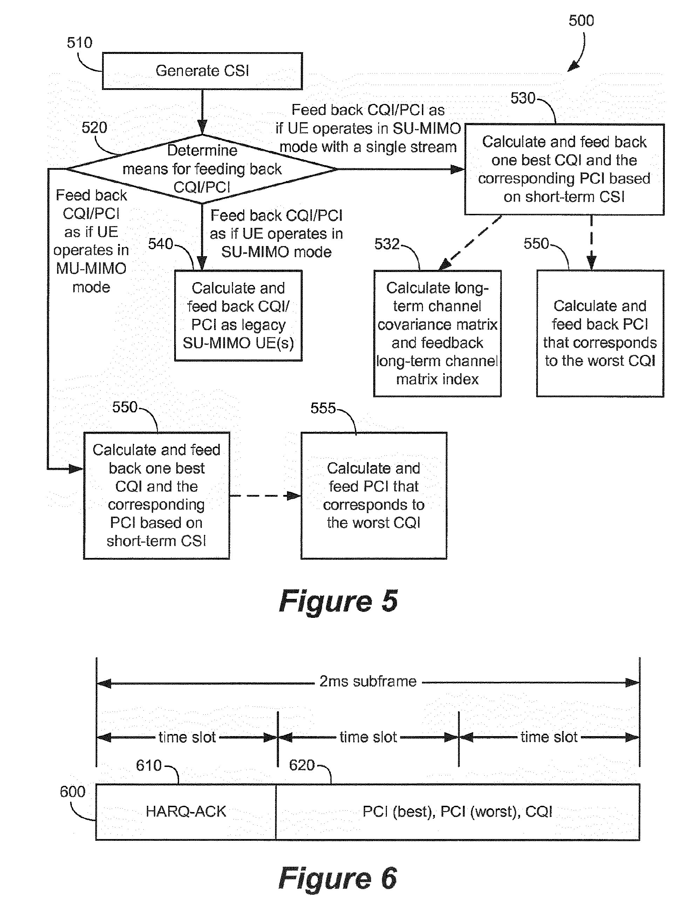

Figure 5 illustrates non-limiting example method 500 of utilizing a general precoding matrix to feed back CSI according to some embodiments. Note that the blocks of method 500 may be executed in any order or combination, and may be executed in conjunction with additional activities and functions not listed. Each of the blocks of method 500 may also be executed individually without the execution of any other block, and any subset of the blocks of method 500 may be executed without executing any blocks not included in such a subset. All such embodiments are contemplated as within the scope of the present disclosure.

At block 510, a UE may generate channel state information. At block 520, a determination may be made as to the method or means of feeding back CQI/PCI. If it is determined at block 520 to feed back CQI/PCI as if the UE operated in SU-MIMO mode with a single stream, at block 530 the UE may feed back a single one best CQI and the corresponding PCI based on the short-term CSI. At block 532, the UE may also calculate a long-term channel covariance matrix (*i.e.,* short-term CSI averaged over a certain period of time) and may feed back the long-term channel matrix index. Alternatively, at block 534 the UE may also feed back the PCI that corresponds to the worst CQI. Note that TxAA capable UEs may feed back only the best CQI and its associated PCI.

If it is determined at block 520 to feed back CQI/PCI as if the UE operated in SU-MIMO mode, at block 540 the UE may calculate and report CQI/PCI as legacy SU-MIMO UE(s).

If it is determined at block 520 to feed back CQI/PCI as if the UE operated in MU-MIMO mode, at block 550 the UE may calculate and feed back a single one best CQI and the corresponding PCI. At block 555, the UE may also feed back a PCI that corresponds to the worst CQI at the same time it feeds back the single one best CQI and the corresponding PCI.

In implementing the present subject matter, a feedback signaling design as disclosed herein may be used. In an embodiment, an HS-DPCCH channel structure may be used for MU-MIMO operation and PCI/CQI feedback report cycles. As described herein, feedback could take one of several forms: one short-term PCI and one CQI, two short-term PCIs (best and worst) and one CQI (best), one short-term PCI and one long-term PCI and one CQI (short-term based). In any of these cases, there may not be enough bits left in HS-DPCCH to accommodate the control information that may be needed for MU-MIMO operation. Disclosed herein are several embodiments that may effectively increase the available bits.

In an embodiment, a spreading factor reduction and time multiplexing of CQI/PCI reports may be used. Where time multiplexing is implemented, interleaving may be performed between two CQI/PCI subframes. While the following embodiments may also be applicable to other implementations, it assumed for illustrative purposes that all the feedback information can be fit into two slots of one HS-DPCCH subframe.

In embodiments where feedback consists of one short-term PCI and one CQI a Type A (two bits of PCI information and eight bits of CQI for a total of ten bits before channel coding) CQI/PCI report may be used. Alternatively, a Type B (two bits of PCI information and five bits of CQI for a total of seven bits before channel coding) CQI/PCI report may be used. The choice of which CQI/PCI report to use for feedback that consists of one short-term PCI and one CQI may depend on the PCI-field length and CQI field length of the available reports.

In embodiments where feedback consists of two short-term PCIs (best and worst) and one CQI (best), a Type A report via rcintcrprctation of the legacy PCI/CQI fields may be used. In an embodiment, an example of which is illustrated in Figure 6, the best PCI, the worst PCI, and the CQI may be multiplexed together, jointly encoded, and mapped to last two slots 620 of HS-DPCCH subframe 600. The best and worst PCIs and CQI may then be jointly coded, for example using the conventional Reed-Muller code. Hybrid automatic repeat request acknowledgement (HARQ ACK) may be mapped to first slot 610 of HS-DPCCH subframe 600.

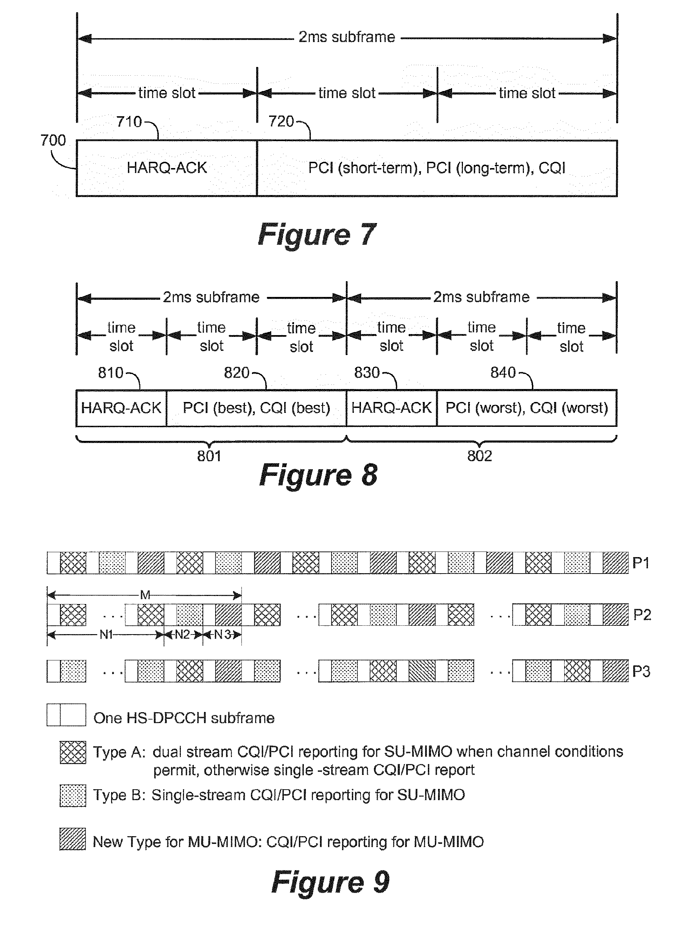

In embodiments where feedback consists of one short-term PCI, one long-term PCI, and one CQI (short-term based), a Type A may also be used to carry such information as shown in Figure 7. In an embodiment, HARQ-ACK may be in first time slot 710 of subframe 700. The short-term PCI, long-term PCI, and CQI may multiplexed together, jointly coded, and mapped to last two time slots 720 of HS-DPCCH subframe 700. The encoding may be performed using, for example, the conventional Reed-Muller code.

In embodiments where feedback consists of two short-term PCIs (best and worst) and two CQIs (best and worst, short-term based), an example of which is illustrated in Figure 8, the UE may multiplex, jointly encode and map to last two slots 820 of one HS-DPCCH subframe 801 the best PCI and corresponding CQI using for example a conventional means. HARQ-ACK may be mapped to first slot 810 of subframe 801. Similarly, the UE may multiplex, jointly encode and map to last two slots 840 of one HS-DPCCH subframe 802 the worst PCI and corresponding CQI using for example conventional means. HARQ-ACK may be mapped to first slot 830 of subframe 802. The two different PCI/CQI reports may be transmitted in time-alternation, possibly configured with different reporting rates.

In many implementations, it is important that a base station has high scheduling flexibility. In order to provide such flexibility, a UE may be required to report PCI/CQI back to base station by taking into account various MIMO operation modes. In an embodiment, a UE may be configured to report the PCI/CQI for SU-MIMO single stream (Type B reporting), SU-MIMO dual stream (Type A reporting), and MU-MIMO in a time multiplexing fashion. In one method of such time multiplexing, a cycle of $M$ CQI reports is used. Every cycle, a UE may transmit N1 Type A reports, N2 Type B reports, and N3=M-N1-N2 MU-MIMO type reports.

Examples of different reporting patterns, such as patterns P1, P2, and P3, are shown in Figure 9. The reporting cycle or pattern parameters M, N1, N2 shown in Figure 9 may be configured by the network via RRC signaling. N3 may be derived using N3=M-N1-N2 as described above. The CQI reporting pattern may also depend on other parameters such as the connection frame number (CFN) and any potential time offsets configured by the network. This may allow synchronization so that the base station may be aware of the type of CQI/PCI report being transmitted by every UE.

In an embodiment, a UE may be aware of when MU-MIMO is being used on a same TTI on which it is scheduled, and thus may be aware of the presence of an interfering stream. This knowledge may be used to improve the UE receiver performance. Moreover, if a UE is aware of the presence of an interfering stream, additional transmission parameters may be transmitted to the UE to improve performance. Such parameters may include, but are not restricted to, a MU-MIMO transmission mode indicating the presence of interfering stream (*i.e.,* the same channelization codes on different pre-coding weights), a power offset (absolute or relative) of the interfering stream, a modulation scheme of the interfering stream (*e.g.,* QPSK, 16QAM, 64QAM), precoding weight information (PWI) for the interfering stream, or a transport block size of the interfering stream.

Parameters, such as a parameter indicating that an incoming HS-PDSCH data stream is transmitted in SU-MIMO or MU-MIMO transmission mode, may be transmitted to a UE using dynamic signaling and/or semi-dynamic signaling. Dynamic signaling may implemented implicitly or explicitly.

In implicit dynamic signaling embodiments, the HS-SCCH type-3 physical channel may be reused to signal UE MIMO related control information, such as SU-MIMO and MU-MIMO control information. Relying on the differences of the MU-MIMO and SU-MIMO precoded channel, the UE can blindly detect the MIMO operating mode. Once MU-MIMO mode is detected, the information transmitted over HS-SCCH can be reinterpreted as the information for demodulation and/or decoding MU-MIMO transmissions.

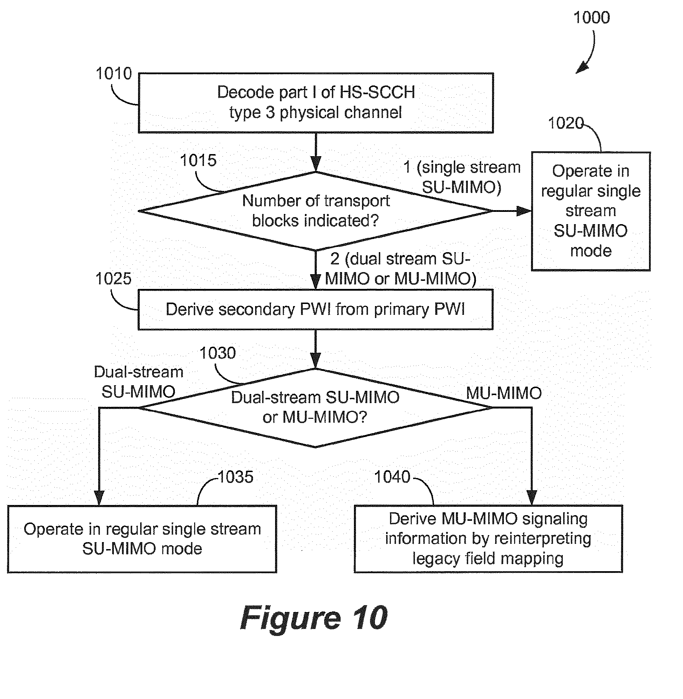

For example, a UE may be configured to perform non-limiting example method 1000 shown in Figure 10 in order to implicitly determine a MIMO mode. Note that the blocks of method 1000 may be executed in any order or combination, and may be executed in conjunction with additional activities and functions not listed. Each of the blocks of method 1000 may also be executed individually without the execution of any other block, and any subset of the blocks of method 1000 may be executed without executing any blocks not included in such a subset. All such embodiments are contemplated as within the scope of the present disclosure.

At block 1010, a UE may read and decode part I ("$x_{ccs}$" field, "$x_{ms}$" field and "$x_{pwipb}$" field) of an HS-SCCH type 3 physical channel. At block 1015, the UE may determine the number of transport blocks indicated by the mapping of the $x_{ccs}$ and $x_{ms}$ fields. If the mapping of the "$x_{ms}$" and "$x_{ccs}$" fields indicates the number of transport blocks is one, the UE may determine that this is a single stream SU-MIMO transmission. The UE may then proceed with operating as in legacy or regular single stream SU-MIMO operation at block 1020.

If, at block 1015, the UE determines that the mapping of the "$x_{ms}$" and "$x_{ccs}$" fields indicates the number of transport blocks is two, the mode may be either dual stream SU-MIMO transmission or MU-MIMO transmission. In this case, at block 1025 the UE may read the "$x_{pwipb}$" for the primary PWI and the secondary PWI may then be derived based on the primary PWI (or signaled explicitly). At block 1030, in combination with the estimated channel matrix **H** and a threshold, the UE may make a decision as to whether the transmission is in SU-MIMO or MU-MIMO mode. For example, if $H(l)$ denotes the 2x2 MIMO channel matrix of the $l^{th}$ path, were $l = 0,1, ..., L - 1$, and precoding matrix $W = \begin{bmatrix} w_1 & w_3 \\ w_2 & w_4 \end{bmatrix}$,

and it may be assumed that the first column of **W** is the precoding vector of the desired user, then the UE may calculate the precoding channel matrix $H_w(l)$ [$h_{w1}(l)$ $h_{w2}(l)$] = $H(l)W$. If

$$\sum_{l=0}^{L-1} \|h_{w,1}(l)\|^2 \Big/ \sum_{l=0}^{L-1} \|h_{w,2}(l)\|^2 > \lambda_{th} \quad \text{or} \quad \sum_{l=0}^{L-1} \|h_{w,1}(l)\|^2 - \sum_{l=0}^{L-1} \|h_{w,2}(l)\|^2 > \lambda_{th},$$ the UE may decide that the transmission is in MU-MIMO mode. Otherwise, the UE may determine that the transmission is in SU-MIMO mode. Note that the threshold value $\lambda_{th}$ may be signaled by the higher layers and may depend on interfering stream information.

If the UE determines at block 1030 that this is a dual-stream SU-MIMO transmission, at block 1035 the UE may operate as in legacy or regular single stream SU-MIMO operation. If the UE determines at block 1030 that this is a MU-MIMO transmission, at block 1040 the UE may implement MU-MIMO receiver signal processing to read HS-SCCH for MU-MIMO signaling information by reinterpreting the legacy field mapping.

As noted herein, in an embodiment, the mapping of $x_{ms}$ field for SU-MIMO may be reinterpreted once the MU-MIMO mode is detected. For example, the $x_{ms}$ field can be mapped to nine different states in SU-MIMO operation. However, once the MU-MIMO mode is detected, six states may be sufficient and there may be three unused mappings or states that may be available for MU-MIMO signaling needs. For example, SU-MIMO $x_{ms}$ mapping Table 1 may be reinterpreted as shown in Table 2, where 111, 011, 001, 101 with $x_{ccs,7}$=000, 110, and 010 may be used to carry not only the modulation scheme for MU-MIMO operation but also other MU-MIMO signaling if needed. Such other signaling may include the transmit power offset between two streams and/or users, information about the other UE, extended codebook PWI, *etc.* In other words, the field mapping of HS-SCCH type 3 may have different interpretations depending on the detected MIMO mode.

**Table 1: SU-MIMO mapping of $x_{ms}$**

| xms,1, xms,2, xms,3 | Modulation for primary transport block | Modulation for secondary transport block | Number of transport blocks |
|---|---|---|---|
| 111 | 16QAM | 16QAM | 2 |
| 110 | 16QAM | QPSK | 2 |
| 101 | 64QAM | Indicated by xccs,7 | Indicated by xccs,7 |
| 100 | 16QAM | n/a | 1 |
| 011 | QPSK | QPSK | 2 |
| 010 | 64QAM | 64QAM | 2 |
| 001 | 64QAM | 16QAM | 2 |

(continued)

| xms,1, xms,2, xms,3 | Modulation for primary transport block | Modulation for secondary transport block | Number of transport blocks |
|---|---|---|---|
| 000 | QPSK | n/a | 1 |

**Table 2: Mapping of $x_{ms}$ if MU-MIMO mode detected**

| xms,1, xms,2, xms,3 | Modulation for primary transport block | Modulation for secondary transport block | Number of transport blocks in case of SU-MIMO |
|---|---|---|---|
| 111 | 16QAM | MU-MIMO info. | 2 |
| 110 | 16QAM | MU-MIMO info. | 2 |
| **101** | **64QAM** | **xccs,7=1** | 1 |
| 101 | QPSK | Xccs,7=0 MU-MIMO info. | 2 |
| **100** | **16QAM** | **n/a** | 1 |
| 011 | QPSK | MU-MIMO info | 2 |
| 010 | 64QAM | MU-MIMO info. | 2 |
| 001 | 64QAM | MU-MIMO info. | 2 |
| **000** | **QPSK** | n/a | 1 |

In explicit dynamic signaling embodiments, the MU-MIMO transmission mode may be explicitly signaled to a UE on a dynamic basis, for example, each time the UE is scheduled to receive High Speed Downlink Shared Channel (HS-DSCH) data. In an embodiment, the MU-MIMO transmission mode information may be included in the control channel preceding the associated data transmission. In UMTS, this information may be included in the HS-SCCH. There are several ways to include such information in the HS-SCCH.

In an embodiment, an extra information bit may be added in HS-SCCH (e.g., $x_{MU\text{-}MIMO}$ in the first part of a new HS-SCCH type). When this extra information bit is set to '1', it may indicate to a UE the presence of a MU-MIMO transmission and thus an interfering stream transmitted on the orthogonal pre-coding weights.

Alternatively, extra information may be carried using the existing HS-SCCH type 3. In an embodiment this may be accomplished by using the $x_{ccs,7}$ bit to jointly code with states 111, 011, and 010 to indicate the MIMO mode and the modulation scheme. An example of such a mapping is shown in Table 3.

**Table 3: Mapping of $x_{ms}$**

| xms,1, xms,2, xms,3 | Modulation for primary transport block | Modulation for secondary transport block in SU-MIMO or MIMO mode indication | Number of transport blocks in case of SU-MIMO |
|---|---|---|---|
| **111** | **16QAM** | **xccs,7=1, 16QAM; xccs, 7=0, MU-MIMO mode** | **2** |
| 110 | 16QAM | QPSK | 2 |
| 101 | 64QAM | Indicated by xccs,7 | Indicated by xccs,7 |
| 100 | 16QAM | n/a | 1 |
| **011** | **QPSK** | **xccs,7=1, QPSK; xccs,7=0, MU-MIMO mode** | **2** |
| **010** | **64QAM** | **xccs,7=1, 64QAM; xccs, 7=0, MU-MIMO mode** | **2** |
| 001 | 64QAM | 16QAM | 2 |
| 000 | QPSK | n/a | 1 |

In an embodiment, the network may indicate the presence of an interfering stream on a dynamic basis by using a special or reserved value of an existing field in the existing HS-SCCH type 3. For example, the network may transmit an HS-SCCH type 3 indicating the presence of two transport blocks and use a reserved or special value for one or more of the fields associated with the secondary transport block. For example, the network may use the transport-block size information for the secondary transport block $(x_{tbssb,1}, x_{tbssb,2}, ..., x_{tbssb,6})$ or the redundancy and constellation version for the secondary transport block. Upon detection of this reserved or special value, the UE may determine that the transmission is a MU-MIMO transmission and that the secondary transport block is dedicated to a different UE.

This special combination or reserved value may be fixed in the specifications and the UE may only act on it in this way when it is configured to do so. For example, a UE supporting this feature may be configured by the network via RRC signalling to operate in such a way (*e.g.,* in MU-MIMO mode). The configuration message may also carry the configuration information on the special or reserved combination that indicates MU-MIMO transmission. In some alternatives, this special combination may correspond to one of the transport block sizes that may not be used by the network due to poor turbo coding performance.

In semi-dynamic signaling embodiments, the MIMO transmission mode may be signaled via higher layer (*e.g.,* via RRC signaling) and therefore before decoding the HS-SCCH type 3 physical channel, the UE may already be aware of the MIMO mode in which it is operating. Thus, when configured in MU-MIMO mode, the UE may receive a single transport block at a time while a second transport block dedicated to a different UE may be present on the interfering stream.

In an embodiment of semi-dynamic signaling, HS-SCCH order may be used, which may enable layer 1 signaling that typically involves less delay and thus may be more practical from the network scheduling standpoint. In this embodiment, a new order type may be introduced and one bit of order may be designed to indicate whether the followed reception of HS-DSCH data is in MU-MIMO mode (*i.e.,* to activate/deactivate the MU-MIMO mode.) For example, $x_{odt,l}$, $x_{odt,2}$, and $x_{odt,3}$ may be set to '100' to signal that this is an MU-MIMO order, and if $x_{ord,1}=1$, the UE may be configured to receive one transport block of data from the MU-MIMO transmission. Otherwise, the UE may be configured to operate in legacy mode. In embodiments where there are not sufficient bits in the existing HS-SCCH order design, a new mapping that identifies the HS-SCCH order message from others may be introduced. For example, the special mapping that may be applied for an MU-MIMO HS-SCCH order may be $x_{ccs,1}, x_{ccs,2}, ..., x_{ccs,7}, x_{ms,1}$ may be set to '11100010', $x_{tbs,1}, x_{tbs,2}, ..., x_{tbs,6}$ may be set to '111101', $x_{hap,1}, x_{hap,2}, x_{hap,3}, x_{rv,1}, x_{rv,2}, x_{rv,3}$ may be set to $x_{ord,1}, x_{ord,2}, x_{ord,3}, x_{ord,4}, x_{ord,5}, x_{ord,6}$, and $x_{nd,1}$ may be reserved.

Note that the CCS bits '1110001' may correspond to an unused CCS configuration. Other unused configurations could also be used instead (*e.g.:* values 113 to 119 in decimal could be appropriate values).

In some MU-MIMO mode implementation, the HS-SCCH type 3 channel may be reused to carry MU-MIMO related control or parameter information. In such embodiments, since only one transport block may be indicated to the UE on the HS-SCCH at a time, a number of existing fields and bit combinations may be re-used to indicate additional MU-MIMO related information or parameters (*e.g.,* power offset, PWI of the interfering stream, etc). A number of methods of carrying specific MU-MIMO related information or parameters may be used in accordance with the present disclosure, and these methods may be used in any order or combination.

In the HS-SCCH type 3, the three $x_{ms}$ bits may indicate the modulation and number of transport blocks present in the associated HS-PDSCH. A UE configured in a MU-MIMO mode may only receive a single transport block at a time, thus only three of the eight possible combinations with the three bits are needed. The unused states may be re-interpreted to provide additional information such as the PWI of the interfering stream. Because the interfering stream may not be transmitted using the same precoding weight as the primary stream for a particular UE, for the case where there are $N$ precoding weights in total, the base station may only need to signal one of $N$-1 precoding weight for the interfering stream. This may provide the base station with the flexibility to not always use the orthogonal weights for the interfering stream. For example, in the case of UMTS Release 7, $N$=4 and signaling for up to three different PWI indices may be used.

In an embodiment, MU-MIMO related information or parameters may be provided to a UE by transmitting an interfering PWI offset index, or $PWI_{off}$. The UE may determine the index of the interfering precoding weight, $PWI_{interf}$, by adding the offset to the PWI for the primary transport block (or stream) (signaled in the conventional HS-SCCH type 3), and then applying a modulo-4 operation:

$$PWI_{interf} = mod(PWI + PWI_{off}, 4)$$

Table 4 illustrates an example of mapping for the modulation and number of transport block bit field ($X_{ms}$) where, in addition to the modulation scheme for the primary stream, the precoding weight indication offset for the interfering stream may also provided. Note that due to the lack of signaling space, the 64QAM entry may be restricted to only two $PWI_{off}$ indices. This restriction may be arbitrary, as in this example, and may be applied to a different modulation scheme (*e.g.*, a different row in the table).

**Table 4: $X_{ms}$ new mapping**

| $X_{ms}$ | Modulation scheme of primary stream | PWI$_{off}$ |
|---|---|---|
| 000 | QPSK | 1 |
| 001 | QPSK | 2 |
| 010 | QPSK | 3 |
| 011 | 16QAM | 1 |
| 100 | 16QAM | 2 |
| 101 | 16QAM | 3 |
| 110 | 64QAM | 1 |
| 111 | 64QAM | 2 |

For example, the restriction may also be applicable to the QPSK instead. Table 5 illustrates an example where due to the lack of signaling space, the 64QAM entry may be restricted to only two PWIoff indices.

**Table 5: $X_{ms}$ alternate new mapping**

| $x_{ms}$ | Modulation scheme of primary stream | PWI$_{off}$ |
|---|---|---|
| 000 | QPSK | 1 |
| 001 | QPSK | 2 |
| 010 | 16QAM | 1 |
| 011 | 16QAM | 2 |
| 100 | 16QAM | 3 |
| 101 | 64QAM | 1 |
| 110 | 64QAM | 2 |
| 111 | 64QAM | 3 |

In an embodiment, the six bits of the transport block size information for the secondary transport block ($X_{tbssb}$) and the two bits from the redundancy and constellation version for the secondary transport block fields ($X_{rvsb}$) may also indicate additional information about the interfering stream. For example, the two bits of $X_{rsvb}$ may indicate the modulation scheme of the interfering stream. Table 6 shows an example mapping of the $X_{rsvb}$ bits.

**Table 6: $X_{rsvb}$ new mapping**

| $X_{rsvb}$ | Modulation scheme of interfering stream |
|---|---|
| 00 | QPSK |
| 01 | 16QAM |
| 10 | 64QAM |
| 11 | Reserved |

Similarly, the six bits from the $X_{tbssb}$ may be used to signal the power offset of the interfering stream compared to the stream dedicated to a UE. A subset of the six bits may be mapped to a range spanning, for example, between -10 and +10dB in steps of 1dB.

In an embodiment, the two bits from the $X_{tbssb}$ may indicate the modulation scheme of the interfering stream (*e.g.,* using the mapping shown in Table 5) whereas the other four bits may indicate the power offset of the interfering stream. Such a power offset may be determined via a table lookup where elements of an index numbered, for example, from 0 to 15, map to distinct power offset values. Table 7 illustrates an example of such a mapping.

**Table 7: Power offset table mapping**

| Signaled power offset index | Power offset value (in dB) |
|---|---|
| 0 | -12 |
| 1 | -9 |
| 2 | -6 |
| 3 | -4 |
| 4 | -3 |
| 5 | -1 |
| 6 | 0 |
| 7 | 1 |
| 8 | 3 |
| 9 | 4 |
| 10 | 6 |
| 11 | 9 |
| 12 | 12 |
| 13 | 15 |
| 14 | 17 |
| 15 | 20 |

Upon reception of this information, a UE may use the signaled parameters to improve its reception by implementing interference cancellation techniques. In the above methods, when referring to carrying new information in existing fields, the bit fields may be reinterpreted and the provided encoding in the existing specifications may remain the same.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Aspects of the invention**

1. A method of providing feedback from a wireless transmit and receive unit (WTRU) to a network device, the method comprising:

operating in multi-user multiple input and multiple output (MU-MIMO) mode;
receiving a plurality of data streams from a Node B;
determining a single-user multiple input and multiple output (SU-MIMO) channel quality indicator (CQI) and precoding control information (PCI);
determining a multiple-user multiple input and multiple output (MU-MIMO) CQI
and PCI; and
transmitting the SU-MIMO CQI and PCI and the MU-MIMO CQI and PCI on a high speed dedicated physical control channel (HS-DPCCH).

2. The method of aspect 1, wherein the SU-MIMO CQI and PCI and the MU-MIMO CQI and PCI are transmitted in a HS-DPCCH subframe.

3. The method of aspect 2, wherein the HS-DPCCH subframe comprises a hybrid automatic repeat request acknowledgement (HARQ-ACK).

4. The method of aspect 1, wherein the WTRU is configured with a plurality of receive antennas.

5. The method of aspect 1, wherein determining the MU-MIMO CQI and PCI comprises determining the MU-MIMO CQI and PCI based on an assumption that an interfering stream is transmitted using a precoding weight.

6. The method of aspect 5, wherein the precoding weight is determined as a function of a candidate precoding weight based on a rule.

7. The method of aspect 5, wherein the precoding weight is orthogonal to a candidate precoding weight.

8. The method of aspect 1, further comprising determining a MU-MIMO alternate PCI that indicates a preferred precoding weight for an interfering stream.

9. The method of aspect 8, further comprising determining an alternate CQI that corresponds to the MU-MIMO alternate PCI.

10. The method of aspect 8, wherein determining the MU-MIMO PCI comprises determining the MU-MIMO PCI based on an assumption that the interfering stream is transmitted on the MU-MIMO alternate PCI.

11. A wireless transmit and receive unit (WTRU) configured to transmit feedback to a network device, comprising:

a processor configured to:

operate the WTRU in multi-user multiple input and multiple output (MU-MIMO) mode, and
determine a single-user multiple input and multiple output (SU-MIMO) channel quality indicator (CQI) and precoding control information (PCI,
determine a multiple-user multiple input and multiple output (MU-MIMO) CQI and PCI; and

a transceiver configured to:

receive the plurality of data streams from a Node B, and
transmit the SU-MIMO CQI and PCI and the MU-MIMO CQI and PCI on a high speed dedicated physical control channel (HS-DPCCH).

12. The WTRU of aspect 11, wherein the transceiver transmits the SU-MIMO CQI and PCI and the MU-MIMO CQI and PCI in a HS-DPCCH subframe.

13. The WTRU of aspect 12, wherein the HS-DPCCH subframe comprises a hybrid automatic repeat request acknowledgement (HARQ-ACK).

14. The WTRU of aspect 11 wherein the transceiver is further configured with a plurality of receive antennas.

15. The WTRU of aspect 11, wherein the processor is further configured to determine the MU-MIMO CQI and PCI based on an assumption that an interfering stream is transmitted using a precoding weight.

16. The WTRU of aspect 15, wherein the processor is further configured to determine the precoding weight as a function of a candidate precoding weight based on a rule.

17. The WTRU of aspect 15, wherein the precoding weight is orthogonal to a candidate precoding weight.

18. The WTRU of aspect 11, wherein the processor is further configured to determine a MU-MIMO alternate PCI that indicates a preferred precoding weight for an interfering stream.

19. The WTRU of aspect 18, wherein the processor is further configured to determine an alternate CQI that corresponds to the MU-MIMO alternate PCI.

20. The WTRU of aspect 18, wherein the processor is further configured to determine MU-MIMO PCI based on an assumption that the interfering stream is transmitted on the MU-MIMO alternate PCI.

**Claims**

1. A method of providing feedback from a wireless transmit and receive unit (WTRU) to a network device, the method comprising:

   operating in multi-user multiple input and multiple output (MU-MIMO) mode;
   determining a single-user multiple input and multiple output (SU-MIMO) channel quality indicator (CQI) and precoding control information (PCI);
   determining an MU-MIMO CQI and PCI based on an assumption that an interfering stream is transmitted using a precoding weight; and
   transmitting the SU-MIMO CQI and PCI and the MU-MIMO CQI and PCI on a high speed dedicated physical control channel (HS-DPCCH).

2. The method of claim 1, wherein the SU-MIMO CQI and PCI and the MU-MIMO CQI and PCI are transmitted in an HS-DPCCH subframe.

3. The method of claim 2, wherein the HS-DPCCH subframe comprises a hybrid automatic repeat request acknowledgement (HARQ-ACK).

4. The method of claim 1, further comprising receiving a plurality of data streams from a Node B, wherein the plurality of data streams are received at the WTRU via a plurality of receive antennas.

5. The method of claim 1, wherein the precoding weight is determined as a function of a candidate precoding weight based on a rule.

6. The method of claim 1, wherein the precoding weight is orthogonal to a candidate precoding weight.

7. The method of claim 1, further comprising determining an MU-MIMO alternate PCI that indicates a preferred precoding weight for the interfering stream.

8. The method of claim 7, further comprising determining an alternate CQI that corresponds to the MU-MIMO alternate PCI.

9. The method of claim 7, wherein determining the MU-MIMO PCI comprises determining the MU-MIMO PCI based on an assumption that the interfering stream is transmitted on the MU-MIMO alternate PCI.

10. A wireless transmit and receive unit (WTRU) configured to transmit feedback to a network device, comprising:

   a processor configured to:

      operate the WTRU in multi-user multiple input and multiple output (MU-MIMO) mode,
      determine a single-user multiple input and multiple output (SU-MIMO) channel quality indicator (CQI) and precoding control information (PCI), and
      determine an MU-MIMO CQI and PCI based on an assumption that an interfering stream is transmitted using a precoding weight; and
      send the SU-MIMO CQI and PCI and the MU-MIMO CQI and PCI for transmission on a high speed dedicated physical control channel (HS-DPCCH).

11. The WTRU of claim 10, wherein the processor is further configured to send the SU-MIMO CQI and PCI and the MU-MIMO CQI and PCI for transmission in an HS-DPCCH subframe.

**12.** The WTRU of claim 11, wherein the HS-DPCCH subframe comprises a hybrid automatic repeat request acknowledgement (HARQ-ACK).

**13.** The WTRU of claim 10, wherein the WTRU is further configured with a plurality of receive antennas for receiving a plurality of data streams from a Node B.

**14.** The WTRU of claim 10, wherein the processor is further configured to determine the precoding weight as a function of a candidate precoding weight based on a rule.

**15.** The WTRU of claim 10, wherein the precoding weight is orthogonal to a candidate precoding weight.

**16.** The WTRU of claim 10, wherein the processor is further configured to determine an MU-MIMO alternate PCI that indicates a preferred precoding weight for the interfering stream.

**17.** The WTRU of claim 16, wherein the processor is further configured to determine an alternate CQI that corresponds to the MU-MIMO alternate PCI.

**18.** The WTRU of claim 16, wherein the processor is further configured to determine the MU-MIMO PCI based on an assumption that the interfering stream is transmitted on the MU-MIMO alternate PCI.

*Figure 1A*

EP 2 632 059 A1

**Figure 1B**

**Figure 1C**

EP 2 632 059 A1

*Figure 2*

310

Generate 3-bit precoding information

300

Transmit precoding
information on
downlink (PWI)

320

Is signaling on
uplink or downlink?

Transmit precoding
information on uplink (PCI)

330

Use $X_{css,7}$, $X_{ms}$,
and $X_{pwipb}$ of
HS-SCCH
type 3 part I

340

type A

Use
type A or type B CQI/PCI
report?

350

Reinterpret type A
report to report two
3-bit PCIs and one
4-bit best CQI, or to
report one 3-bit PCI
and one 4- or 5-bit
best CQI

360

Reinterpret type
B report to report
one 3-bit PCI and
one 4- or 5-bit
best CQI

**Figure 3**

400

410

Generate CSI

Feed back CQI/PCI
as if UE operates in
SU-MIMO mode

420

Determine
means for feeding back
CQI/PCI

Feed back CQI/PCI
as if UE operates in
MU-MIMO mode

430

Calculate and
feed back CQI/
PCI as legacy
SU-MIMO UE(s)

Feed back
CQI/PCI as if UE
operates in
SU-MIMO mode
with a single
stream

450

Calculate and
feed back one
best CQI
and the
corresponding
PCI

440

Calculate and feed
back one best
CQI and the
corresponding
PCI based on
short-term CSI

**Figure 4**

510 Generate CSI

500

520 Determine means for feeding back CQI/PCI

Feed back CQI/PCI as if UE operates in SU-MIMO mode with a single stream

530 Calculate and feed back one best CQI and the corresponding PCI based on short-term CSI

Feed back CQI/PCI as if UE operates in MU-MIMO mode

Feed back CQI/PCI as if UE operates in SU-MIMO mode

540 Calculate and feed back CQI/ PCI as legacy SU-MIMO UE(s)

532 Calculate long-term channel covariance matrix and feedback long-term channel matrix index

550 Calculate and feed back PCI that corresponds to the worst CQI

550 Calculate and feed back one best CQI and the corresponding PCI based on short-term CSI

555 Calculate and feed PCI that corresponds to the worst CQI

## Figure 5

2ms subframe

time slot — time slot — time slot

610 620

600

HARQ-ACK | PCI (best), PCI (worst), CQI

## Figure 6

2ms subframe

time slot | time slot | time slot

710 720

700

| HARQ-ACK | PCI (short-term), PCI (long-term), CQI |

## Figure 7

2ms subframe | 2ms subframe

time slot | time slot | time slot | time slot | time slot | time slot

810 820 830 840

| HARQ-ACK | PCI (best), CQI (best) | HARQ-ACK | PCI (worst), CQI (worst) |

801 802

## Figure 8

P1

M

P2

N1 N2 N3

P3

☐ One HS-DPCCH subframe

▨ Type A: dual stream CQI/PCI reporting for SU-MIMO when channel conditions permit, otherwise single -stream CQI/PCI report

▨ Type B: Single-stream CQI/PCI reporting for SU-MIMO

▨ New Type for MU-MIMO: CQI/PCI reporting for MU-MIMO

## Figure 9

*Figure 10*

Europäisches
Patentamt

European
Patent Office

Office européen
des brevets

# EUROPEAN SEARCH REPORT

Application Number

EP 13 16 9072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TEXAS INSTRUMENTS: "Multi-rank Implicit Feedback for MU-MIMO", 3GPP DRAFT; R1-101089 TI FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418652, * page 1 - page 4; figure 2; table 1 * | 1-4, 11-14 | INV. H04B7/06 H04B7/04 |
| A | "3 rd Generation Partnership Project; Technical Specification Group Radio Access Network; Evolved Universal Terrestrial Radio Access (E-UTRA); Physical layer procedures (Release 9)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.1, 17 December 2009 (2009-12-17), pages 1-81, XP050401048, * page 72 * | 2-4, 12-14 | |
| X | NTT DOCOMO: "Views on Single-Cell CSI Feedback Enhancement for DL MU-MIMO in LTE-Advanced", 3GPP DRAFT; R1-094241 CSI FEEDBACK FOR DL MU-MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388705, [retrieved on 2009-10-06] * pages 1,2,5 * | 1-5, 10-14 | |

TECHNICAL FIELDS SEARCHED (IPC)

H04B

-/--

The present search report has been drawn up for all claims

| Place of search | Date of completion of the search | Examiner |
|---|---|---|
| Munich | 8 July 2013 | Franz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches Patentamt
European Patent Office
Office européen des brevets

Application Number

EP 13 16 9072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZTE: "Consideration on Enhancement of MU-MIMO Feedback Schemes", 3GPP DRAFT; R1-100527 MU ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418156, [retrieved on 2010-01-12] * page 2 - page 6 * | 1-18 | |
| A | PHILIPS ET AL: "CQI definition for MU-MIMO", 3GPP DRAFT; R1-082798, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080813, 13 August 2008 (2008-08-13), XP050316290, [retrieved on 2008-08-13] * pages 1-3,11 * | 1-18 | TECHNICAL FIELDS SEARCHED (IPC) |
| A | MOTOROLA: "On Extensions to Rel-8 PMI Feedback", 3GPP DRAFT; R1-101129 EXTENSION OF REL-9 PMI FEEDBACK (FINAL CLEAN), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418677, [retrieved on 2010-02-16] * pages 2-3 * | 6-9, 15-18 | |

The present search report has been drawn up for all claims

| Place of search | Date of completion of the search | Examiner |
|---|---|---|
| Munich | 8 July 2013 | Franz, Volker |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61320487 A